# EUROPEAN PATENT SPECIFICATION

(11) **EP 3 530 586 B1**
(45) Date of publication and mention of the grant of the patent: **23.02.2022**
(21) Application number: 17861376.6
(22) Date of filing: 11.10.2017
(51) Int. Cl.: B65D 51/20, B32B 3/04, B65D 53/04

(54) **DEVICE FOR SEALING RECEPTACLES AND METHOD FOR MANUFACTURING A DEVICE FOR SEALING RECEPTACLES**
VORRICHTUNG ZUM VERSIEGELN VON BEHÄLTERN UND VERFAHREN ZUR HERSTELLUNG EINER VORRICHTUNG ZUM VERSIEGELN VON BEHÄLTERN
DISPOSITIF POUR SCELLER DES RÉCIPIENTS ET PROCÉDÉ DE FABRICATION D'UN DISPOSITIF POUR SCELLER DES RÉCIPIENTS

(30) Priority: 18.10.2016 BR 102016024281
(43) Date of publication of application: 28.08.2019
(73) Proprietor: Geraldiscos Com. Ind. E Repres. De Cortiça Ltda, 06524-115 Santana de Parnaiba (BR)
(72) Inventor: SANTOS, Claudio Leal Dos, 06475-060 Barueri (BR)
(74) Representative: Jenkins, Peter David
(86) International application number: PCT/BR2017/050315
(87) International publication number: WO 2018/071997

(56) References cited:
- EP-A1- 2 778 090
- EP-A2- 1 199 253
- CA-A1- 2 846 161
- US-A- 4 934 544
- US-A1- 2007 003 725
- US-A1- 2007 003 725
- US-A1- 2008 073 308
- US-A1- 2009 057 326
- US-A1- 2011 100 989
- US-B1- 6 461 714
- US-B1- 6 866 926
- US-B2- 7 055 713
- US-B2- 7 648 764
- US-B2- 7 854 987

## Description

### Field of the Invention

The present invention describes a Container Sealing Device and a Process for Manufacturing a Container Sealing Device. More specifically, it discloses a sealing device having a pair of tabs associated with an induction seal, wherein said tabs can be joined for subsequent removal of the seal from the container. The present invention is in the field of the packaging industry in the food, cosmetic, pharmaceutical, cleaning, general chemical and other segments.

### Background of the Invention

The material currently used for closure of containers is inadequate in its composition and consistency. The types of seals on the market can often offer a lot of resistance and/or difficulties in opening the containers, which can lead to a consumer accident, thus causing damage to the consumer's health or safety. In addition to these issues, the existing tab options in the market have limitations in their opening performance. Often they do not open, because they have nowhere to pull the seal from, or often the tab breaks, and opening the container does not occur normally. Leading the consumer to use unsafe utensils to complete and perform the container opening.

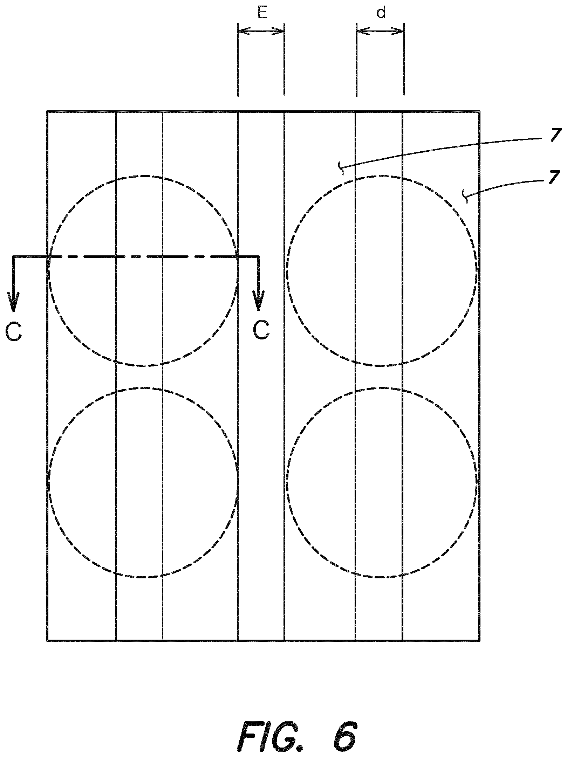

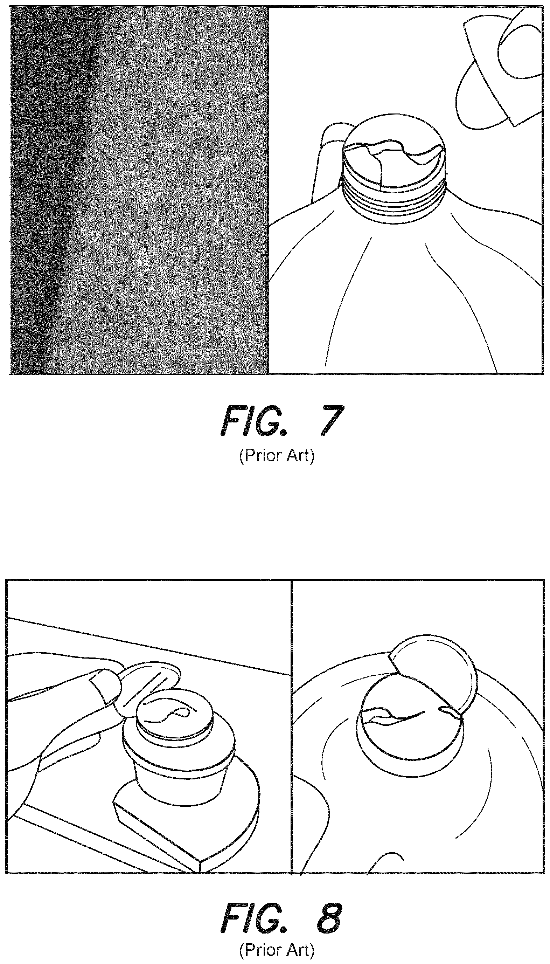

In this regard, Figures 6 and 7 are shown, which relate to some unsuccessful attempts to open said sealing seals. As will be appreciated, in attempting to open these seals, the tab eventually ruptures, requiring the user to carry an additional element (for example, a knife) in order to enable the container to be opened.

When searching the background art in the scientific and patent literature, the following documents have been found dealing with the topic:
- US-B-6,461,714 discloses a container sealing seal comprising three layers, one bottom layer for the purpose of sealing on the container, one second layer over the bottom layer which is folded to the center of the seal and projected out of the third layer and/or top layer. The device shown in US-B-6,461,714 shows a number of inconveniences related mainly to the tabs' resistance to rupture, as well as difficulties in manufacturing the seal. The device has a high stress concentration in the central region of the seal, especially in the region of projection of the second layer, thus facilitating rupture of the tabs, even before their removal from the container.

- US-A-2007/0003725 discloses a container sealing device having the features of the precharacterizing portion of claim 1 and in particular discloses a container sealing seal defined by a lower thermoplastic film and a second upper thermoplastic film wherein the upper film is welded onto the lower film by means of ultrasonic welding at the central region of the seal. The object presented by US-A-2007/0003725 shows a number of inconveniences, for example, lack of protective layers and reinforcements for the tabs, thus compromising the integrity of the seal at the time of removal from the container. In this proposed embodiment, there is an extremely high probability that the seal will rupture in attempting to open the container, in view of the concentration of stresses on the welded layer at the central region.
- EP-A-1199253 also discloses a container sealing device having the features of the precharacterizing portion of claim 1.

Thus, from what is evident in the researches literature, no documents have been found anticipating or suggesting the teachings of the present invention, such that the solution proposed herein has novelty and an inventive step in view of the prior art.

With regard to the general concept of systems and devices for container sealing, the solutions shown in the prior art do not completely solve the aforementioned problems while meeting all the above mentioned requirements in a single device. The types of seals on the market do not offer a single seal provided with tabs which gives good resistance to tearing and/or breakage the structure of the device, and show structural and procedural deficiencies, thus making product seals more fragile and making it difficult to open them, which may lead to a consumption accident.

### Summary of the Invention

Accordingly, the present invention aims to solve the problems encountered in the prior art through a multi-layer container sealing device, facilitating removal of security seals and packaging seals of various types such as glass, plastics or metal. Said device comprises a pair of upper tabs, so that the steps of using the device may be defined by: lifting, joining and removing the tabs. Accordingly, the present device aims to facilitate removal of seals from various containers, thus avoiding consumption accidents.

In a first object, the present invention provides a container sealing device according to claim 1.

In a second object, the present invention provides a process for manufacturing a container sealing device according to claim 8.

Furthermore, the inventive concept common to all of the claimed protection contexts relates to a container sealing device formed from multiple layers, wherein part of the layers which make up the device are permanently laminated and the tabs, which are elements of the present invention, are partially laminated thereby allowing them to separate and allow for gripping and subsequent removal of the seal that is sealing the container.

Said multi-layers of the device are defined by: at least one pair of polymer film strips and at least one upper polymer film associated on the seal forming said pair of tabs. Nevertheless, the multiple layers defining the device include protective layers and reinforcements for the tabs, and further provide a predetermined spacing according to the diameter of the sealant film, thus ensuring a good resistance to rupture of the tabs. Further, said sealing device of the present invention provides the use steps defined by: lifting, joining and removing the pair of tabs.

These and other objects of the invention shall be immediately considered by persons skilled in the art and by companies having interests in the segment, and shall be described in sufficient detail for its reproduction in the following description.

### Brief Description of the Figures

In order to better define and clarify the content of the present patent application, the following figures are presented:
Figure 1 shows a top view of said container sealing device.
Figure 2 shows side view of said container sealing device and a step of operation of the device.
Figure 3 shows side view of said container sealing device and a step of operation of the device.
Figure 4 shows side view of said container sealing device and a step of operation of the device.
Figure 5 shows the layers defining the said device in one embodiment.
Figure 6 shows an exemplification of the device at the end of the manufacturing process, prior to cutting for forming the seal, wherein the polymeric film strips, a cutting plane section of the strips and the distance between the strips are illustrated.
Figures 7 and 8 show drawbacks of prior art seals.

### Detailed Description of the Invention

The descriptions that follow are presented only by way of example and non-limiting of the scope of the invention and will enable a clearer comprehension of the object of the present patent application.

In a first object, the present invention provides a container sealing device comprising at least one seal (1), wherein said seal is provided with at least one outer upper surface (4) and at least one lower surface (5). In addition, the seal (1) is associated with at least one pair of tabs (2), wherein said tabs (2) are associated with the outer upper surface (4).

In one embodiment, the seal structure (1) can be defined by: Sealing film, Laminating adhesive, may optionally contain Barrier Film, Lamination adhesive, Aluminum or Polyethylene or Polyester Plastic Film, Lamination adhesive, Expanded or Non-expanded Polyethylene and/or Polypropylene Film, Varnish, Polyester Film, Primer, Polyethylene lamination Film. Further, the seal (1) in one embodiment comprises a disk shape.

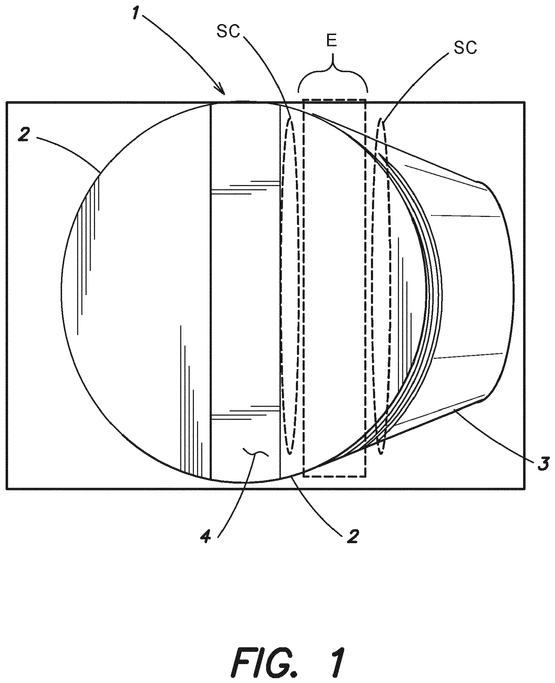

In one embodiment of the present invention, the pair of tabs (2) is positioned such that the tabs forming said pair are disposed opposite to each other on the outer upper surface (4) of the seal (1), as shown in Figures 1-5 , thus forming a region comprising a spacing (E) between the tabs. Said spacing (E) has the purpose of increasing the integrity of the sealing device at the time of removal of the container seal, as well as providing a better gripping for the tabs (2) of the device of the present invention.

Thus, the arrangement of the pair of tabs (2), as well as their positioning on the outer upper surface (4) of the seal (1), are important parameters that promote a resistance gain to the sealing device, thus assuring to the user that at the moment of opening the container does not occur a rupture of the tab, and yet, making it easier to remove the seal (1).

For exemplary purposes of this invention, spacing (E) between tabs should be understood as a pre-established distance between the tabs, which allows for better gripping of the tabs and facilitates removal of said seal (1) from the container. The spacing in one embodiment varies according to the diameter of the conventional seal, and thus, the length and width of the spacing are directly proportional to the diameter of the seal, i.e., for the larger diameters and/or cross section of the seal, is larger the spacing (E), and optionally, is larger the tab. Such a measure aims to ensure efficiency of removal of the seal from the container, thus avoiding rupturing of the pair of tabs.

In one example, diameter values were adopted and plotted in Table 1 below in order to obtain the suitable spacings for each seal size, as shown in Table 1.

**Table 1: ratio between seal diameter and spacing between the tabs**

| Diameters (mm) | | spacing (mm) |
|---|---|---|
| > 20.00 | ≤ 35.99 | 2.00 (±0.50) |
| > 36.00 | ≤ 44.99 | 3.00 (±0.50) |
| > 45.00 | ≤ 66.00 | 7.00 (±1.00) |
| > | 66.01 | 9.00 (±1.00) |

The ratios noted above between diameters and distances and/or spacing between the tabs show excellent rupture resistance properties for the sealing device when subjected to the stress of removing the tab from the container. Nevertheless, the abovementioned spacing and diameter ratios enable better distribution of forces at the time of removal of the seal (1), and thus, the user, when joining the two tabs and pulling for removal of the seal (1) from the seal container, requires low effort when compared to an inadequate distance between tabs (2).

For exemplary purposes of the present invention, spacing (E) shall mean the shortest distance between the tabs, as shown in Figure 1. In one embodiment, the spacing (E) is constant throughout the seal (1).

Further, the materials responsible for forming said pair of tabs (2), in one embodiment, may be defined by: Varnish, Polyester Film, Primer, Polyethylene Film, Primer.

For the purposes of this invention, tabs shall mean any material surface fixed to the seal (1) surface that may be raised, joined and pulled allowing the seal (1) to be removed from any container.

Said seal (1), in one embodiment, may be sealed to the container (3) by means of cold glue, induction or heat seal, thus serving all possible segments such as food, cosmetics, pharmaceuticals, cleaning, general chemicals and others.

The pair of tabs (2), in one embodiment, comprises multi-layers defined by: at least one first film (7) comprising a pair of strips; and at least one second film (8); wherein: the pair of strips of the first film (7) comprises a distance (d) between said strips defining the spacing (E) between the tabs (2), as can be clearly seen in Figure 6 , wherein the first film (7) is arranged on the outer upper surface (4) of the seal (1); and the second film (8) is associated with the first film (7) and the outer upper surface (4) of the seal (1), and is positioned on the first film (7).

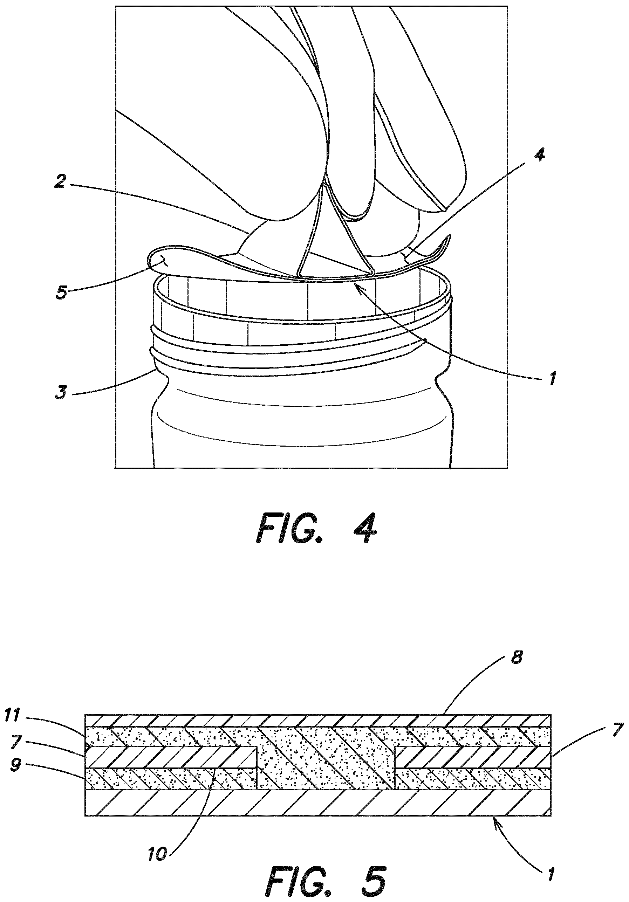

Said tabs (2) are composed in multiple layers, which can be defined by at least one first film (7) comprising a pair of strips and at least one second film (8), as can be seen in Figure 5.

Figure 6 shows an exemplification of the multiple layers forming the device before the seal is cut geometrically. Figure 6 thus represents the first film (7) and the strips composing it, detailing the distance (d) between the strips and the spacing (E) between the tabs. Figure 6 further shows a cutting plane section (C) which forms the seal (1) with the tabs (2) of the sealing device of the present invention.

The pair of strips of said first film (7) is positioned at the region between the seal film and/or seal (1) and the second film (8). In one embodiment, said pair of strips is positioned sectionally on the seal (1) and said strips are separated by a distance (d) from each other. In one embodiment, the spacing (E) coincides with said distance (d), i.e. the spacing (E) is defined by the distance (d) present in the first film (7).

Further, the first film (7) and the second film (8), in one embodiment, may be defined as generally thermoplastic films such as, for example, polyester film, expanded Polyethylene; polypropylene film, PET film and/or resin (polyethylene terephthalate). In addition, the first film (7), in one embodiment, comprises nonstick property and/or a resin solution (9), wherein said resin solution (9) is applied to the bottom surface (10) of the first film (7).

Notwithstanding, in one exemplification the first film (7) comprises material with protrusions and recesses, thereby increasing friction between the user's opening limb and said tab, thus facilitating its removal.

By looking at the cross-sectional area of the sealing device of the present invention, as shown in Figure 5, the seal (1) is provided with at least one pair of strips of the first film (7) and at least one upper polymeric film (8).

The pair of strips of the first film (7), in one embodiment, is disposed between the outer upper surface (4) of the seal (1) and the upper polymeric film (8). Wherein, the pair of strips of the first film (7) is associated with the second polymeric film (8) by means of extrusion and lamination coatings.

The pair of polymer film strips (7), in one embodiment, is responsible for subsequently forming the tabs (2). In addition, in order for the pair of polymer film strips not to be adhered to the seal (1), when subjected to the extrusion coating and laminating process, a resinous solution (9) is applied to the lower surface (10) of the first film (7) which prevents adhesion of the pair of strips of the first film (7) to the outer upper surface (4) of the seal (1), thus allowing the pair of tabs (2) of the present invention to be formed. Further, in another embodiment, the material composing the first film (7) may comprise a non-stick property, preventing it from being adhered to the top surface (4) of the seal (1).

In one embodiment the resinous solution is defined by varnish. However, the present invention is not limited to the use of only varnish as an agent which prevents adhesion of said pair of strips to the seal (1), but also, the present invention enables the use of materials that are non-adherent to each other when subjected to heat of the extrusion and lamination coating process.

The upper polymeric film (8), in one embodiment, is positioned over said polymer strips and over the central region of the seal (1) defining the region comprising the spacing (E). In one embodiment, said second film (8) is associated with the outer upper surface (4) of the seal (1) and the first film (7) by means of extrusion and laminating coatings. In a further embodiment, for proper adhesion of said second film (8) to the seal (1), an adhesive (11) is added between the layers defining the device. For purposes of exemplification, this association may be accomplished by a process known as Extrusion Coating.

In this product concept, part of the layers are permanently laminated and the tabs (2), which are elements of the present invention, are partially laminated thereby allowing them to separate and permit gripping and subsequent removal of the seal (1) which is sealed onto the container (3). Nevertheless, the tabs (2) of the present invention, in one embodiment, comprise flexible material, such property provides the user to join the two tabs (2) and pull them in an easy and practical manner.

Said tabs (2) comprise, in one embodiment, a connecting surface (SC) affixed to the upper surface (4) of the seal (1). Connecting surface (SC) shall mean a transition region between the layer definitively laminated onto the seal (1) and the free and unlaminated layer, pair of tabs (2).

In one embodiment, said connecting surfaces (SC) are positioned end-to-end on the upper surface (4) of the seal (1). For purposes of explaining this invention, end-to-end fastening shall mean a connecting surface (SC) length that is arranged across the entire length of the cross-section of the seal (1). For exemplifying purposes, when the seal (1) obeys a circular section, the connecting surface (SC) in contact with the seal (1) surface may be understood to be a chord of the circumference, i.e., a segment not coinciding with the center of the circumference.

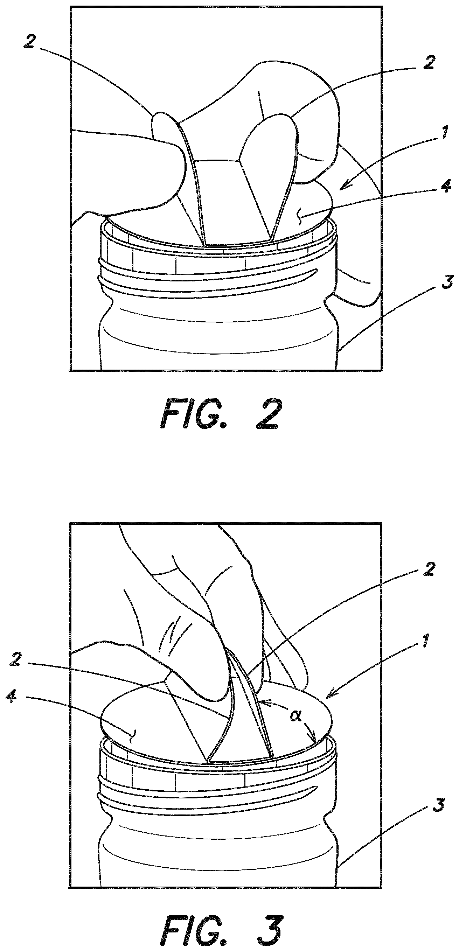

Notwithstanding, said tabs (2) allow rotation movement about the connecting surface (SC) so that in the step of joining the tabs (2), Figure 3 , for removing the seal (1) from the container (3), the two tabs (2) form an alpha (α) angle with the surface of the seal (1).

In one embodiment, said tabs (2) have the same cross-sectional area, and when disposed on the seal (1) form a device comprising symmetry, i.e., the tabs comprise the same size. Such geometry favors removal of the seal (1) in the direction of the connecting surface (SC), i.e., the user joins the two tabs and pulls them approximately parallel to the connecting surfaces (SC), thereby removing the seal from the container (3).

Notwithstanding, in one embodiment, the present invention also provides the arrangement of distinctly sized tabs on the seal (1), i.e., comprising two tabs, one being larger than the other. Such a configuration is indicated for the removal of seal (1) in a direction approximately perpendicular to the connecting surface (SC), thus joining said pair of tabs (2) and initiating the opening of seal (1) from the side closest to the larger tab.

The solution of the present invention with two tabs (2) at the outer top part (4) of the seal (1) allows the user to securely hold the two tabs and then remove the seal (1) from the container (3).

By comprising pair of tabs (2), the present invention has an advantage over induction seals and/or common seals present in the market, since currently it is common for seals to have a single tab, which most of the time shows complications in opening the container, as it does not provide uniformity in the loading of forces exerted by the user on the seal. Thus, the seals present in the prior art most of the time suffer rupture before the seal is even removed, thus forcing the consumer to use additional steps for opening the seal, and can thus generate a consumption accident. Figures 6 and 7 show the tests performed with current seals and their respective ruptures, demonstrating their fragility and limitation.

In a second object, the present invention shows a process for manufacturing said device comprising the steps of:
a. forming a seal (1) provided with an outer upper surface (4) and an inner surface (5);
b. and forming a pair of tabs by:
   b1. arranging a first film (7), formed by adjacent strips, on the outer upper surface (4);
   b2. arranging a second film (8) on the first film (7); and
   b3. associating the second film (8) with the first film (7) and with the outer upper surface (4) of the seal (1);
   wherein,
   the step of associating the second film (8) with the first film (7) and with the outer upper surface (4) comprises application of coatings through extrusion and lamination.

The manufacturing of a seal (1) in the first step of the process is carried out by the conventional laminating process, wherein said seal comprises at least one outer upper surface (4) and at least one inner surface (5).

Subsequently, the seal (1) is subjected to a laminating process with the first film (7), wherein the first film (7) is arranged on the outer upper surface (4) of the seal (1). Wherein, the first film (7) comprises parallel and adjacent strips cut from, for example, a rewinder, striped to a specified width, and arranged throughout its length, which is responsible for forming said tabs. In one embodiment, the seal (1) receives a pair of strips on its outer upper surface (4).

After the step of arranging the first film (7) on the seal (1), the second film (8) is associated with the layers from the prior process by extrusion and lamination coating. In one embodiment, the joining of the second film (8) with the seal (1) and the first film (7) is performed from a machine with extrusion coating technology. For exemplification purposes, the result obtained after this step is shown in Figure 6.

Lastly, there is a cut-out of the seal (1) wherein, in one embodiment, the seal (1) is disk shaped. This step is performed in view of the fact that this process results, for example, in a quadrilateral plate, which is cut out in the shape of disks for the formation of the seal (1). Further, an exemplification for this cutting step can be clearly seen in Figure 6, which shows an exemplification of how the cutting plane section (C) is performed.

In addition, the process described herein may comprise an additional step of applying nonstick agent and/or resin solution to the lower surface (10) of the first film (7). The process is carried out prior to the process of arranging a first film (7) on the seal (1) and is carried out for the purpose of preventing the first film (7) from being adhered to the seal in the extrusion and lamination coating process. Further, in one embodiment, the nonstick agent can be defined as varnish.

In addition, the process described above may comprise the further step of applying aqueous primer on the first film (7) prior to the process of arranging a first film (7) on the seal (1). In one embodiment, the aqueous primer is applied to the side opposite to the application of the nonstick agent on said first film (7).

### Example 1 - Preferred Embodiment

In a preferred embodiment, the two tabs (2) are associated with said seal (1) through a lamination process and are arranged oppositely relative to each other so that both are separated by a distance (d) located at the spacing (E).

Accordingly, the tabs (2), when joined and pulled by the user, allow better distribution of forces per area, allowing the user to use less force and have better efficiency in removing the seal (1) from the container (3).

In a hypothetical situation, where the tabs (2) were fixed on the center or very close to the center of the seal (1), the stresses on the attachment point between seal (1) and tabs (2) would be larger for the same force applied in the previous case, thus causing frequent shearing of the tabs (2) before total removal of the seal (1) sealed onto the container (3).

### Example 2 - Preferred Embodiment

For better understanding of the use of said container sealing device of the present invention, Figures 2-4 show steps which describe the movement required for removal of the device.

Firstly, the tabs (2) are raised by using at least two fingers, as shown in Figure 2. Then, the tabs (2) are joined and rotated about the connecting surface (SC), as shown in Figure 3. Subsequently, for removal of the device, the user applies a force by pulling the tabs (2) upwardly and thus, the seal (1) is removed from the container onto which it is arranged, as shown in Figure 4.

The present sealing device may be used in a wide range of applications, for example in the packaging of the following products: Food, cosmetics, pharmaceuticals, cleaning, general chemicals and others.

Persons skilled in the art shall consider the knowledge presented herein and may reproduce the invention in the presented modalities and in other variants encompassed by the scope of the appended claims.

## Claims

1. Container sealing device comprising at least one seal (1), wherein said seal is provided with at least one outer upper surface (4) and at least one lower surface (5), **wherein the container sealing device** comprises at least one pair of tabs (2), wherein said tabs (2) are associated with the outer upper surface (4) **characterized in that** the pair of tabs (2) comprises:
a. at least one first film (7) comprising a pair of strips; and
b. at least one second film (8);
wherein
- the pair of strips of the first film (7) comprises a distance (d) between said strips;
- the first film (7) is arranged on the outer upper surface (4) of the seal (1); and
- the second film (8) is associated with the first film (7) and with the outer upper surface (4) of the seal (1), and is positioned on the first film (7).

2. Container sealing device according to claim 1, **characterized in that** the pair of tabs (2) comprises tabs positioned opposite to each other.

3. Container sealing device according to any one of claims 1-2, **characterized in that** it comprises a spacing (E) between said tabs (2).

4. Container sealing device according to claim 3, **characterized in that** the spacing (E) is directly proportional to the diameter of the seal (1).

5. Container sealing device according to claim 3 or claim 4, **characterized in that** the spacing (E) is defined by the distance (d) between the strips of the pair of strips.

6. Container sealing device according to any one of claims 1-5, **characterized in that** the first film (7) comprises:
a. nonstick property; and/or
b. resinous solution (9);
wherein the resinous solution (9) is applied to a lower surface (10) of the first film (7).

7. Container sealing device according to any one of claims 1-6, **characterized in that** the tabs (2) are provided with at least one connecting surface (SC) on the upper surface (4) of the seal (1).

8. Process for manufacturing a container sealing device, **characterized in that** it comprises the steps of:
a. forming a seal (1) provided with an outer upper surface (4) and an inner surface (5);
b. and forming a pair of tabs by:
b1. arranging a first film (7), formed by adjacent strips, on the outer upper surface (4);
b2. arranging a second film (8) on the first film (7); and
b3. associating the second film (8) with the first film (7) and with the outer upper surface (4) of the seal (1);
wherein,
the step of associating the second film (8) with the first film (7) and with the outer upper surface (4) comprises application of coatings through extrusion and lamination.

9. Process for manufacturing a container sealing device according to claim 8, **characterized in that** it comprises an additional step of cutting the seal (1) in a disk shape.

10. Process for manufacturing a container sealing device according to any one of claims 8-9, **characterized in that** the strips of the first film (7) comprise a spacing (E) between each other.

11. Process for manufacturing a container sealing device according to any one of claims 8-10, **characterized in that** it additionally comprises a step of applying a nonstick solution to a lower surface (10) of the first film (7).

## Patentansprüche

1. Behälterabdichtvorrichtung mit wenigstens einer Dichtung (1), wobei die Dichtung mit wenigstens einer äußeren Oberseite (4) und wenigstens einer Unterseite (5) versehen ist, wobei die Behälterabdichtvorrichtung wenigstens ein Paar von Laschen (2) aufweist, wobei die Laschen (2) mit der äußeren Oberseite (4) verknüpft sind, **dadurch gekennzeichnet, dass** das Laschenpaar (2) aufweist:
a. wenigstens eine erste Schicht (7) mit einem Paar von Streifen; und
b. wenigstens eine zweite Schicht (8);
wobei
- das Streifenpaar der ersten Schicht (7) einen Abstand (d) zwischen den Streifen aufweist;
- die erste Schicht (7) an der äußeren Oberseite (4) der Dichtung (1) angeordnet ist; und
- die zweite Schicht (8) mit der ersten Schicht (7) und mit der äußeren Oberseite (4) der Dichtung (1) verknüpft ist und auf der ersten Schicht (7) positioniert ist.

2. Behälterabdichtvorrichtung nach Anspruch 1, **dadurch gekennzeichnet, dass** das Laschenpaar (2) einander gegenüber positionierte Laschen aufweist.

3. Behälterabdichtvorrichtung nach einem der Ansprüche 1-2, **dadurch gekennzeichnet, dass** sie einen Zwischenraum (E) zwischen den Laschen (2) aufweist.

4. Behälterabdichtvorrichtung nach Anspruch 3, **dadurch gekennzeichnet, dass** der Zwischenraum (E) direkt proportional zum Durchmesser der Dichtung (1) ist.

5. Behälterabdichtvorrichtung nach Anspruch 3 oder 4, **dadurch gekennzeichnet, dass** der Zwischenraum (E) durch den Abstand (d) zwischen den Streifen des Streifenpaares definiert ist.

6. Behälterabdichtvorrichtung nach einem der Ansprüche 1-5, **dadurch gekennzeichnet, dass** die erste Schicht (7) aufweist:
a. Antihaft-Eigenschaft; und/oder
b. Harzlösung (9);
wobei die Harzlösung (9) auf eine Unterseite (10) der ersten Schicht (7) aufgebracht ist.

7. Behälterabdichtvorrichtung nach einem der Ansprüche 1-6, **dadurch gekennzeichnet, dass** die Laschen (2) mit wenigstens einer Verbindungsfläche (SC) auf der Oberseite (4) der Dichtung (1) versehen sind.

8. Verfahren zum Herstellen einer Behälterabdichtvorrichtung, **dadurch gekennzeichnet, dass** es die Schritte aufweist:
a. Bilden einer Dichtung (1), die mit einer äußeren Oberseite (4) und einer Innenseite (5) versehen ist; und
b. Bilden eines Paares von Laschen durch:
b1. Anordnen einer durch benachbarte Streifen gebildeten ersten Schicht (7) auf der äußeren Oberseite (4);
b2. Anordnen einer zweiten Schicht (8) auf der ersten Schicht (7); und
b.3 Verknüpfen der zweiten Schicht (8) mit der ersten Schicht (7) und mit der äußeren Oberseite (4) der Dichtung (1);
wobei der Schritt des Verknüpfens der zweiten Schicht (8) mit der ersten Schicht (7) und mit der äußeren Oberseite (4) ein Aufbringen von Beschichtungen durch Extrusion und Laminierung aufweist.

9. Verfahren zum Herstellen einer Behälterabdichtvorrichtung nach Anspruch 8, **dadurch gekennzeichnet, dass** es einen zusätzlichen Schritt eines Schneidens der Dichtung (1) in eine Scheibenform aufweist.

10. Verfahren zum Herstellen einer Behälterabdichtvorrichtung nach einem der Ansprüche 8-9, **dadurch gekennzeichnet, dass** die Streifen der ersten Schicht (7) einen Zwischenraum (E) dazwischen aufweisen.

11. Verfahren zum Herstellen einer Behälterabdichtvorrichtung nach einem der Ansprüche 8-10, **dadurch gekennzeichnet, dass** es zusätzlich einen Schritt eines Aufbringens einer Antihaftlösung auf eine Unterseite (10) der ersten Schicht (7) aufweist.

## Revendications

1. Dispositif de fermeture hermétique de contenant comprenant au moins un joint d'étanchéité (1), dans lequel ledit joint d'étanchéité est pourvu d'au moins une surface supérieure extérieure (4) et d'au moins une surface inférieure (5), dans lequel le dispositif de fermeture hermétique de contenant comprend au moins une paire de languettes (2), dans lequel lesdites languettes (2) sont associées à la surface supérieure extérieure (4),
**caractérisé en ce que** la paire de languettes (2) comprend :
a. au moins un premier film (7) comprenant une paire de bandes ; et
b. au moins un deuxième film (8) ;
dans lequel,
- la paire de bandes du premier film (7) comprend une distance (d) entre lesdites bandes ;
- le premier film (7) est disposé sur la surface supérieure extérieure (4) du joint d'étanchéité (1) ; et
- le deuxième film (8) est associé au premier film (7) et à la surface supérieure extérieure (4) du joint d'étanchéité (1), et est positionné sur le premier film (7).

2. Dispositif de fermeture hermétique de contenant selon la revendication 1, **caractérisé en ce que** la paire de languettes (2) comprend des languettes positionnées en opposition.

3. Dispositif de fermeture hermétique de contenant selon l'une quelconque des revendications 1 à 2, **caractérisé en ce qu'il** comprend un espacement (E) entre lesdites languettes (2).

4. Dispositif de fermeture hermétique de contenant selon la revendication 3, **caractérisé en ce que** l'espacement (E) est directement proportionnel au diamètre du joint d'étanchéité (1).

5. Dispositif de fermeture hermétique de contenant selon la revendication 3 ou 4, **caractérisé en ce que** l'espacement (E) est défini par la distance (d) entre les bandes de la paire de bandes.

6. Dispositif de fermeture hermétique de contenant selon l'une quelconque des revendications 1 à 5, **caractérisé en ce que** le premier film (7) comprend :
a. une propriété antiadhésive ; et/ou
b. une solution résineuse (9) ;
dans lequel la solution résineuse (9) est appliquée sur une surface inférieure (10) du premier film (7).

7. Dispositif de fermeture hermétique de contenant selon l'une quelconque des revendications 1 à 6, **caractérisé en ce que** les languettes (2) sont pourvues d'au moins une surface de liaison (SC) sur la surface supérieure (4) du joint d'étanchéité (1).

8. Procédé de fabrication d'un dispositif de fermeture hermétique de contenant, **caractérisé en ce qu'il** comprend les étapes consistant à :
a. former un joint d'étanchéité (1) pourvu d'une surface supérieure extérieure (4) et d'une surface intérieure (5) ; et
b. former une paire de languettes en :
b1. disposant un premier film (7), formé par des bandes adjacentes, sur la surface supérieure extérieure (4) ;
b2. disposant un deuxième film (8) sur le premier film (7) ; et
b3. associant le deuxième film (8) au premier film (7) et à la surface supérieure extérieure (4) du joint d'étanchéité (1) ;
dans lequel,
l'étape d'association du deuxième film (8) au premier film (7) et à la surface supérieure extérieure (4) comprend l'application de revêtements par extrusion et laminage.

9. Procédé de fabrication d'un dispositif de fermeture hermétique de contenant selon la revendication 8, **caractérisé en ce qu'il** comprend une étape supplémentaire consistant à découper en forme de disque le joint d'étanchéité (1).

10. Procédé de fabrication d'un dispositif de fermeture hermétique de contenant selon l'une quelconque des revendications 8 à 9, **caractérisé en ce que** les bandes du premier film (7) comprennent un espacement (E) entre elles.

11. Procédé de fabrication d'un dispositif de fermeture hermétique de contenant selon l'une quelconque des revendications 8 à 10, **caractérisé en ce qu'il** comprend également une étape d'application d'une solution antiadhésive sur une surface inférieure (10) du premier film (7).
